# EUROPEAN PATENT SPECIFICATION

(11) **EP 2 558 897 B1**
(45) Date of publication and mention of the grant of the patent: **17.04.2019**
(21) Application number: 11713427.0
(22) Date of filing: 30.03.2011
(51) Int. Cl.: G02B 6/44, H04Q 1/14

(54) **SYSTEM COMPRISING A PLURALITY OF DISTRIBUTION DEVICES**
MEHRFACH-VERTEILANORDNUNGEN AUFWEISENDER AUFBAU
SYSTEME COMPRENANT PLUSIEURS DISPOSITIFS DE DISTRIBUTION

(30) Priority: 28.10.2010 US 407721 P; 16.04.2010 US 325082 P
(43) Date of publication of application: 20.02.2013
(73) Proprietor: Corning Optical Communications LLC, Hickory, NC 28601 (US)
(72) Inventor: FABRYKOWSKI, Grzegorz, PL-95-010 Strykow (PL); MÜLLER, Michael, 58706 Menden (DE); GRALEWSKI-SEK, Grzegorz K., PL-91-849 Lodz (PL)
(74) Representative: Sturm, Christoph
(86) International application number: PCT/US2011/030466
(87) International publication number: WO 2011/130004

(56) References cited:
- WO-A1-2009/029485
- US-A- 4 995 688
- US-B1- 6 245 998

## Description

### BACKGROUND

The present invention relates to a system comprising a plurality of distribution devices such as optical waveguide distribution devices, in particular comprising a plurality of wall-mounted distribution boards, for handling data conductors such as optical waveguides or junctions between data conductors, in accordance with the precharacterizing clause of Claim 1.

When constructing optical waveguide cable networks, for example, optical waveguide distribution devices are required in order to ensure structured wiring. One demand placed on such optical waveguide distribution devices is a maximum possible number of optical waveguide distribution devices fitted with a high packing density and, at the same time, a low level of mechanical stress on the optical waveguides. Similar demands are placed on distribution devices for handling other data conductors.

DE 20 2007 000 556 U1 has disclosed an optical waveguide distribution device in the form of a wall-mounted distribution board and having a housing and assemblies arranged in the housing for handling optical waveguides. The housing of the optical waveguide distribution device known from this prior art has a modular design and has a plurality of basic modules which can be connected to one another and which can be connected in a defined grid pattern in the horizontal direction and/or vertical direction in order to extend the dimensions of the housing of the optical waveguide distribution device.

EP 2 060 942 A2 has likewise disclosed an optical waveguide distribution device with a housing and assemblies accommodated in the housing for handling, namely connecting and/or storing, optical waveguides. In accordance with this prior art, a plurality of optical waveguide distribution devices can be connected to one another in order to form a system comprising a plurality of optical waveguide distribution devices.

A system according to the preamble of claim 1 is disclosed in US 6 245 998 B1.

Until now, guiding or transferring data cables in the region of the distribution devices has presented difficulties.

### SUMMARY

Against this background, the present invention is based on the problem of providing a novel system comprising a plurality of distribution devices. This problem is solved by a system having the features of Claim 1.

The present invention proposes for the first time providing a separate functional region on a distribution device, which functional region serves the purpose exclusively of guiding data cables. A functional region which serves the purpose of connecting and/or storing data conductors guided in the data cables is separated physically and functionally from this first functional region, which serves exclusively to guide data cables. When a plurality of such distribution devices are grouped next to one another and/or one above the other to form a system of a plurality of distribution devices, the functional regions which are used exclusively for guiding data cables having the data conductors form at least one cable guide channel, which extends continuously in the horizontal and/or vertical direction over a plurality of distribution devices. Particularly preferred guidance and handling of data cables is thus possible.

Preferably, the first functional region and the second functional region of the housing of each distribution device are covered or closed by in each case one individual cover-like housing upper part.

When the first functional regions and the second functional regions of the housings of the distribution devices are closed or covered by an individual cover-like housing upper part, individual access to the first functional regions and second functional regions of the distribution devices is possible.

As a result, it is then possible to provide a system comprising a plurality of distribution devices, in which different access rights to the first functional regions and the second functional regions of the distribution devices can be established.

### BRIEF DESCRIPTION OF THE DRAWINGS

Preferred developments of the invention are given in the dependent claims and the description below. Exemplary embodiments of the invention will be explained in more detail which reference to the drawing, in which:
Figure 1 shows a schematic illustration of a system according to the invention comprising a plurality of distribution devices in the form of optical
   waveguide distribution devices in accordance with a first exemplary embodiment of the invention;
Figure 2 shows a schematic illustration of a system according to the invention comprising a plurality of distribution devices in the form of optical waveguide distribution devices in accordance with a second exemplary embodiment of the invention;
Figure 3 shows a schematic illustration of a system according to the invention comprising a plurality of distribution devices in the form of optical waveguide distribution devices in accordance with a third exemplary embodiment of the invention;
Figure 4 shows the arrangement shown in Figure 1 together with a housing upper part.

### DETAILED DESCRIPTION

The invention relates to a system comprising a plurality of distribution devices, in particular comprising a plurality of distribution devices in the form of wall-mounted distribution boards. Furthermore, the invention relates to a distribution device as part of such a system. In the text which follows, the invention for the preferred application for optical waveguide distribution devices is described.

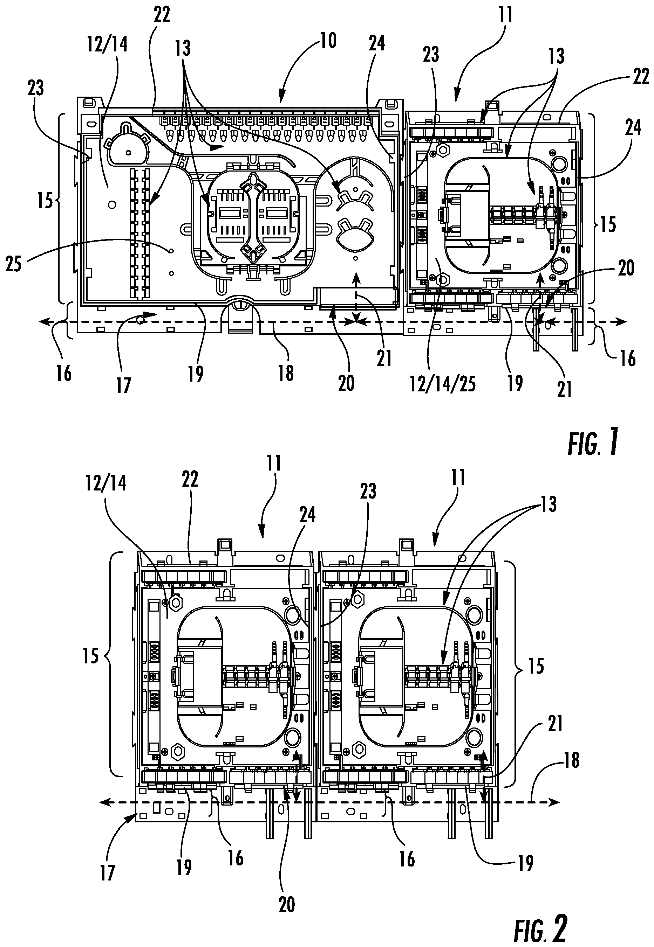

Figure 1 shows an exemplary embodiment of a system according to the invention comprising a plurality of optical waveguide distribution devices, with two optical waveguide distribution devices 10 and 11 being positioned next to one another in Figure 1.

Each of the optical waveguide distribution devices 10 and 11 comprises a housing 12 and assemblies 13 accommodated in the housing 12 for connecting and/or storing optical waveguides, with only the housing lower parts, or bases, 14 of the housings 12 of the optical waveguide distribution devices 10 and 11 being shown in Figure 1.

According to the invention, the housing 12 of each optical waveguide distribution device 10 and 11 of a system according to the invention comprising a plurality of optical waveguide distribution devices has at least two physically and functionally separate functional regions, namely at least one first functional region 15 for connecting and/or storing optical waveguides guided in optical waveguide cables and one second functional region 16 exclusively for guiding optical waveguide cables having the optical waveguides.

It can be seen from Figure 1 that the second functional regions 16 of the optical waveguide distribution devices 10 and 11 positioned next to one another define a continuous cable guide channel 17, which extends over all of the optical waveguide distribution devices 10 and 11 positioned next to one another, in order to transfer optical waveguide cables in a horizontal direction between the optical waveguide distribution devices 10 and 11 positioned next to one another in a manner physically separate from the first functional regions 15 thereof. This transfer of the optical waveguide cables between the optical waveguide distribution devices 10 and 11 via the continuous cable guide channel 17 is illustrated in Figure 1 by dotted arrows 18 extending in the horizontal direction.

When optical waveguide distribution devices are positioned one above the other, the second functional regions 16 thereof form a continuous cable guide channel extending in the vertical direction in order then to transfer optical waveguide cables in the vertical direction between optical waveguide distribution devices positioned one above the other.

As can be seen from Figure 1, the first functional region 15 and the second functional region 16 of the respective housing 12 of the respective optical waveguide distribution device 10, 11 are separated from one another in the region of each optical waveguide distribution device 10 and 11 by a side wall 19 of the respective housing lower part 14, with in each case at least one aperture 20 being introduced into these side walls 19, by virtue of which the first functional regions 15 and second functional regions 16 of the optical waveguide distribution devices 10 and 11 are separated from one another, in order to transfer optical waveguides or optical waveguide cables guiding the optical waveguides between these two functional regions 14 and 15 of the optical waveguide distribution devices 10 and 11. This transfer is illustrated in Figure 1 by vertically running, dotted arrows 21.

In addition to the side walls 19 of the housing lower parts 14 of the housings 12 of the optical waveguide distribution devices 10 and 11, which side walls separate the first functional regions 15 and the second functional regions 16 of the optical waveguide distribution devices 10 and 11 from one another, the housing lower parts 14 of the housings 12 of the optical waveguide distribution devices 10 and 11 comprise further side walls 22, 23 and 24, wherein, in the exemplary embodiment shown in Figure 1, in which optical waveguide distribution devices 10 and 11 are positioned laterally next to one another, the first functional regions 15 of these optical waveguide distribution devices 10 and 11 positioned next to one another are separated from one another by directly adjoining side walls 23 and 24 of the adjacent optical waveguide distribution devices 10 and 11.

In the exemplary embodiment shown in Figure 1, in which the optical waveguide distribution devices 10 and 11 are therefore positioned next to one another, the first functional regions 15 thereof are separated from one another by the side walls 23, 24, but the second functional regions 16 thereof form the continuous cable guide channel 17.

In addition to the abovementioned side walls 19, 22, 23 and 24, each housing lower part 14 of the housing 12 of each optical waveguide distribution device 10 and 11 furthermore comprises a rear wall 25, via which the respective optical waveguide distribution device 10 or 11 can be fastened on a bearing structure, for example a housing wall. The assemblies 13 for connecting and/or storing the optical waveguides are positioned on this rear wall 25 of the respective housing lower part 14 of the respective optical waveguide distribution device 10, 11.

Figure 2 shows an embodiment of the invention in which, in turn, two optical waveguide distribution devices are positioned next to one another, but in contrast to the exemplary embodiment shown in Figure 1, the two optical waveguide distribution devices 11 positioned next to one another are of identical design. Otherwise, there are no differences, with the result that reference is made to the statements above so as to avoid unnecessary repetition.

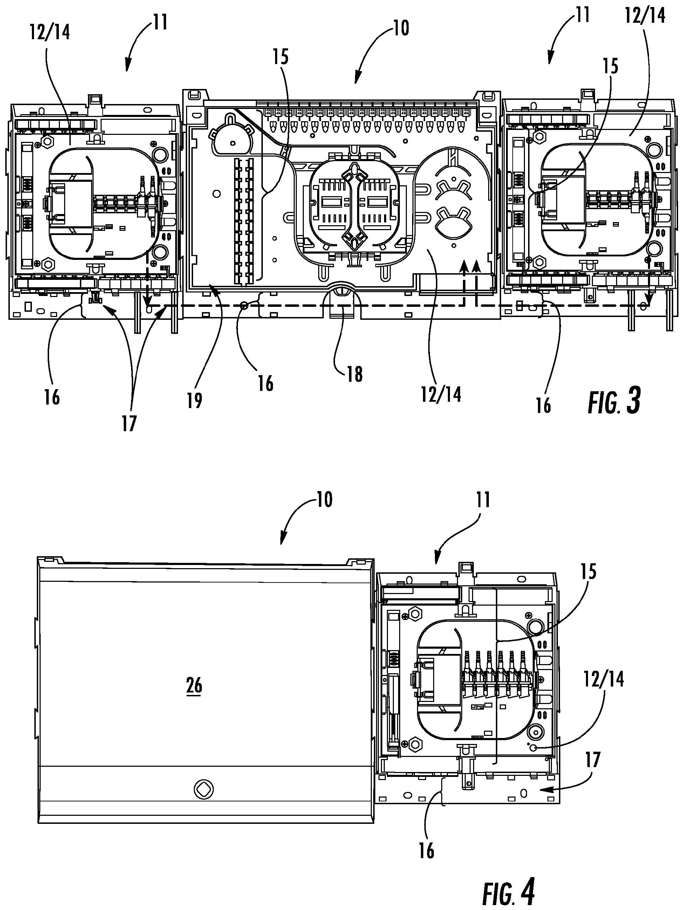

In the exemplary embodiment shown in Figure 3, a system comprising a plurality of optical waveguide distribution devices is shown which comprises three optical waveguide distribution devices 10 and 11 positioned next to one another, namely the optical waveguide distribution device 10 shown in Figure 1 and, to the left and right of this, identical optical waveguide distribution devices 11. In this case too, the only difference is the number of optical waveguide distribution devices provided or positioned next to one another, with the result that reference is again made to the exemplary embodiment shown in Figure 1 so as to avoid unnecessary repetition.

It is therefore part of the present invention to propose a system comprising a plurality of optical waveguide distribution devices, wherein each optical waveguide distribution device comprises at least the two functional regions 15 and 16.

When optical waveguide distribution devices having the functional regions 15 and 16 are positioned next to one another and/or one above the other, the first functional regions 15 of the optical waveguide distribution devices 10, 11 positioned next to one another and/or one above the other are separated from one another in each case by side walls of the housing lower parts 14; the second functional regions 16 thereof form continuous cable guide channels 17.

In addition to the housing lower parts 14, each optical waveguide distribution device 10, 11 comprises at least one cover-like housing upper part, or cover.

In accordance with a first advantageous development of the invention, it is proposed that the first functional region 15 and the second functional region 16 of the housing 12 or housing lower part 14 of each optical waveguide distribution device 10, 11 is closed or covered by a common cover-like housing upper part 26. This is shown in Figure 4.

This common housing upper part for the first functional regions 15 and second functional regions 16 of the optical waveguide distribution devices 10 and 11 can in this case extend over a plurality of housing lower parts, which are positioned next to one another and/or one above the other, of a plurality of optical waveguide distribution devices, or, as is shown in Figure 4, exclusively over one optical waveguide distribution device 10 or 11.

Preferred is a development of the invention in which individual cover-like housing upper parts are provided for the first functional regions 15 and the second functional regions 16 of the housing lower parts 14 of the housings 12 of each optical waveguide distribution device 10, 11 in order to individually cover or close the first functional regions 15 and second functional regions 16.

In this case, an individual housing upper part for a first functional region 15 can then extend over a plurality of first functional regions 15 of a plurality of optical waveguide distribution devices positioned next to one another and/or one above the other in order to close jointly a plurality of first functional regions 15 or to make a plurality of first functional regions 15 accessible jointly for service personnel and fitters. The individual housing upper parts for the second functional regions 16 can likewise extend over a plurality of second functional regions 16 of a plurality of optical waveguide distribution devices positioned next to one another and/or one above the other in order also to make the cable guide channels 17 defined by the second functional regions 16 accessible jointly to service personnel.

The invention is not restricted to the preferred application of optical waveguide distribution devices. Instead the invention can also be used for other distribution devices for handling other data conductors than optical waveguides, for example for handling copper conductors.

## Claims

1. A system of distribution devices for handling data conductors or junctions between data conductors, the system comprising:
a plurality of distribution devices (10, 11), wherein each distribution device (10, 11) comprises,
a housing (12) having assemblies for connecting and/or storing data conductors, and
at least two physically and functionally separate functional regions (15, 16) in the housing, wherein
a first functional region (15) of each distribution device (10, 11) provides for at least one or more of connecting and storing data conductors,
a second functional region (16) of each distribution device (10, 11) provides exclusively for guiding data cables having the data conductors:
**characterised in that**
the plurality of the distribution devices (10, 11) are positioned next to each other or one above the other, in such a way that
the second functional regions (16) of one of the plurality of the distribution devices (10, 11) positioned next to each other or one above the other define a continuous cable guide channel (17) which extends over the distribution devices (10, 11) positioned next to to each other or one above the other, in order to transfer data cables between the distribution devices (10, 11) in the horizontal or vertical direction and in a manner physically separated from the first functional regions (15) of the plurality of distribution devices (10, 11);
the first functional regions (15) of the plurality of distribution devices positioned next to each other or one above the other are separated from one another by adjoining side walls (23, 24) of the housings, and further **characterised in that**
the first functional region (15) and the second functional region (16) of the housing of each distribution device (10, 11) of the plurality of distribution devices are separated from one another by a side wall (19) of a housing lower part of the respective housing, and wherein the side walls (19) of the housing lower part of each distribution device of the plurality of distribution devices have at least one aperture (20) for transferring the data cables having the data conductors between the two functional regions (15, 16).

2. The system of claim 1, wherein the first functional region (15) and the second functional region (16) of the housing of each distribution device (10, 11) of the plurality of distribution devices are closed or covered by a common cover-like housing upper part (26).

3. The system of claim 2, wherein the common housing upper part (26) extends over housing lower parts of a plurality of distribution devices positioned at least one of next to one another and one above the other.

4. The system of claim 1, wherein the first functional region (15) and the second functional region (16) of the housing of each distribution device (10, 11) of the plurality of distribution devices are closed or covered by an individual cover-like housing upper part.

5. A system of claim 4, wherein the individual housing upper part for the first functional region extends over a plurality of first functional regions of the plurality of distribution devices positioned at least one of next to one another and one above the other.

6. The system of claim 4, wherein the individual housing upper part for the second functional region extends over a plurality of second functional regions of a plurality of distribution devices positioned at least one of next to one another and one above the other.

## Patentansprüche

1. System von Verteilervorrichtungen zum Handhaben von Datenleitern oder Verbindungen zwischen Datenleitern, wobei das System aufweist:
mehrere Verteilervorrichtungen (10, 11), wobei jede Verteilervorrichtung (10, 11) aufweist:
ein Gehäuse (12), das Baugruppen zum Verbinden und/oder Unterbringen von Datenleitern, und
mindestens zwei physikalisch und funktionell getrennte Funktionsbereiche (15, 16) in dem Gehäuse,
wobei
ein erster Funktionsbereich (15) jeder Verteilervorrichtung (10, 11) mindestens zum Verbinden und/oder zum Unterbringen von Datenleitern vorgesehen ist,
ein zweiter Funktionsbereich (16) jeder Verteilervorrichtung (10, 11) ausschließlich zum Führen von Datenkabeln vorgesehen ist, die die Datenleiter enthalten;
**dadurch gekennzeichnet, dass**
die mehreren Verteilervorrichtungen (10, 11) nebeneinander oder übereinander angeordnet sind, so dass
die zweiten Funktionsbereiche (16) einer der mehreren nebeneinander oder übereinander angeordneten Verteilervorrichtungen (10, 11) einen fortlaufenden Kabelführungskanal (17) bilden, der sich über die nebeneinander oder übereinander angeordneten Verteilervorrichtungen (10, 11) erstreckt, um Datenkabel zwischen den Verteilervorrichtungen (10, 11) in horizontaler oder vertikaler Richtung und in einer von den ersten Funktionsbereichen (15) der mehreren Verteilervorrichtungen (10, 11) räumlich getrennten Weise zu übertragen;
die ersten Funktionsbereiche (15) der mehreren nebeneinander oder übereinander angeordneten Verteilervorrichtungen durch angrenzende Seitenwände (23, 24) der Gehäuse voneinander getrennt sind,
und ferner **dadurch gekennzeichnet, dass**
der erste Funktionsbereich (15) und der zweite Funktionsbereich (16) des Gehäuses jeder Verteilervorrichtung (10, 11) der mehreren Verteilervorrichtungen durch eine Seitenwand (19) eines Gehäuseunterteils des jeweiligen Gehäuses voneinander getrennt sind, und wobei die Seitenwände (19) des Gehäuseunterteils jeder Verteilervorrichtung der mehreren Verteilervorrichtungen mindestens eine Öffnung (20) zur Übertragung der Datenkabel, die die Datenleiter enthalten, zwischen den beiden Funktionsbereichen (15, 16) aufweisen.

2. System nach Anspruch 1, wobei der erste Funktionsbereich (15) und der zweite Funktionsbereich (16) des Gehäuses jeder Verteilervorrichtung (10, 11) der mehreren Verteilervorrichtungen durch ein gemeinsames deckelartiges Gehäuseoberteil (26) geschlossen oder abgedeckt sind.

3. System nach Anspruch 2, wobei sich das gemeinsame Gehäuseoberteil (26) über Gehäuseunterteile mehrerer Verteilervorrichtungen erstreckt, die mindestens nebeneinander und/oder übereinander angeordnet sind.

4. System nach Anspruch 1, wobei der erste Funktionsbereich (15) und der zweite Funktionsbereich (16) des Gehäuses jeder Verteilervorrichtung (10, 11) der mehreren Verteilervorrichtungen durch ein individuelles deckelartiges Gehäuseoberteil geschlossen oder abgedeckt sind.

5. System nach Anspruch 4, wobei sich das individuelle Gehäuseoberteil für den ersten Funktionsbereich über mehrere erste Funktionsbereiche der mehreren Verteilervorrichtungen erstreckt, die mindestens nebeneinander und/oder übereinander angeordnet sind.

6. System nach Anspruch 4, wobei sich das individuelle Gehäuseoberteil für den zweiten Funktionsbereich über mehrere zweite Funktionsbereiche mehrerer Verteilervorrichtungen erstreckt, die mindestens nebeneinander und/oder übereinander angeordnet sind.

## Revendications

1. Système de dispositifs de distribution pour manipuler des conducteurs de données ou des jonctions entre des conducteurs de données, le système comprenant :
une pluralité de dispositifs de distribution (10, 11), dans lequel chaque dispositif de distribution (10, 11) comprend
un logement (12) ayant des ensembles pour connecter et/ou stocker des conducteurs de données, et
au moins deux régions fonctionnelles (15, 16), physiquement et fonctionnellement séparées, dans le logement, dans lequel
une première région fonctionnelle (15) de chaque dispositif de distribution (10, 11) permet la connexion et/ou le stockage de conducteurs de données,
une seconde région fonctionnelle (16) de chaque dispositif de distribution (10, 11) permet exclusivement le guidage de câbles de données ayant les conducteurs de données ;
**caractérisé en ce que**
la pluralité des dispositifs de distribution (10, 11) sont positionnés les uns à côté des autres ou les uns au-dessus des autres, de manière telle que
les secondes régions fonctionnelles (16) d'un de la pluralité des dispositifs de distribution (10, 11) positionnés les uns à côté des autres ou les uns au-dessus des autres définissent un canal guide-câble continu (17) qui s'étend par-dessus les dispositifs de distribution (10, 11) positionnés les uns à côté des autres ou les uns au-dessus des autres, afin de transférer des câbles de données entre les dispositifs de distribution (10, 11) dans la direction horizontale ou verticale et d'une manière physiquement séparée des premières régions fonctionnelles (15) de la pluralité de dispositifs de distribution (10, 11) ;
les premières régions fonctionnelles (15) de la pluralité de dispositifs de distribution positionnés les uns à côté des autres ou les uns au-dessus des autres soient séparées les unes des autres par des parois latérales contiguës (23, 24) des logements, et en outre **caractérisé en ce que**
la première région fonctionnelle (15) et la seconde région fonctionnelle (16) du logement de chaque dispositif de distribution (10, 11) de la pluralité de dispositifs de distribution sont séparées l'une de l'autre par une paroi latérale (19) d'une partie inférieure de logement du logement respectif, et dans lequel les parois latérales (19) de la partie inférieure de logement de chaque dispositif de distribution de la pluralité de dispositifs de distribution ont au moins une ouverture (20) pour transférer les câbles de données ayant les conducteurs de données entre les deux régions fonctionnelles (15, 16) .

2. Système selon la revendication 1, dans lequel la première région fonctionnelle (15) et la seconde région fonctionnelle (16) du logement de chaque dispositif de distribution (10, 11) de la pluralité de dispositifs de distribution sont fermées ou couvertes par une partie supérieure de logement commune en forme de couvercle (26).

3. Système selon la revendication 2, dans lequel la partie supérieure de logement commune (26) s'étend par-dessus des parties inférieures de logement d'une pluralité de dispositifs de distribution positionnés les uns à côté des autres et/ou les uns au-dessus des autres.

4. Système selon la revendication 1, dans lequel la première région fonctionnelle (15) et la seconde région fonctionnelle (16) du logement de chaque dispositif de distribution (10, 11) de la pluralité de dispositifs de distribution sont fermées ou couvertes par une partie supérieure de logement individuelle en forme de couvercle.

5. Système selon la revendication 4, dans lequel la partie supérieure de logement individuelle pour la première région fonctionnelle s'étend par-dessus une pluralité de premières régions fonctionnelles de la pluralité de dispositifs de distribution positionnés les uns à côté des autres et/ou les uns au-dessus des autres.

6. Système selon la revendication 4, dans lequel la partie supérieure de logement individuelle pour la seconde région fonctionnelle s'étend par-dessus une pluralité de secondes régions fonctionnelles d'une pluralité de dispositifs de distribution positionnés les uns à côté des autres et/ou les uns au-dessus des autres.
